# FASCICULE DE BREVET EUROPEEN

(11) **EP 3 696 026 B1**
(45) Date de publication et mention de la délivrance du brevet: **06.05.2026**
(21) Numéro de dépôt: 20157155.1
(22) Date de dépôt: 13.02.2020
(51) Int. Cl.: B60R 16/03, B60L 58/10, B60L 58/12, B60L 1/00

(54) **PROCÉDÉ ET SYSTÈME DE GESTION DE L'ÉNERGIE EMBARQUÉE À BORD D'UN VÉHICULE DE TRANSPORT À PROPULSION AUTONOME ET VÉHICULE DE TRANSPORT CORRESPONDANT**
VERFAHREN UND SYSTEM ZUR ENERGIESTEUERUNG AN BORD EINES AUTONOM ANGETRIEBENEN TRANSPORTFAHRZEUGS, UND ENTSPRECHENDES TRANSPORTFAHRZEUG
METHOD AND SYSTEM FOR MANAGING THE ENERGY ON BOARD A TRANSPORT VEHICLE WITH AUTONOMOUS PROPULSION AND CORRESPONDING TRANSPORT VEHICLE

(30) Priorité: 15.02.2019 FR 1901578
(43) Date de publication de la demande: 19.08.2020
(73) Titulaire: ALSTOM Holdings, 93400 Saint-Ouen-sur-Seine (FR)
(72) Inventeur: RENIE, Matthieu, 17139 DOMPIERRE SUR MER (FR); VIENNE, Mathieu, 17000 LA ROCHELLE (FR); MUSSET, Sébastien, 17220 SAINTE SOULLE (FR)
(74) Mandataire: Plasseraud IP

(56) Documents cités:
- EP-A1- 1 129 892
- FR-A1- 2 961 775
- US-A- 5 426 589
- US-A1- 2003 137 193
- US-A1- 2004 000 909
- US-A1- 2008 085 430
- US-A1- 2014 012 446

## Description

La présente invention concerne un procédé et un système de gestion de la fourniture d'énergie électrique à plusieurs équipements consommateurs d'énergie dans un véhicule de transport à partir d'un dispositif de stockage d'énergie embarqué à bord du véhicule.

L'invention concerne, en outre, un véhicule de transport à propulsion autonome, c'est-à-dire autonome en énergie électrique, c'est-à-dire encore à alimentation en énergie électrique embarquée, et notamment un véhicule ferroviaire, tel qu'un tramway ou un train, adapté pour interagir avec, ou comprenant, un tel système de gestion, et/ou à fonctionner conformément à un tel procédé.

Il est bien connu que, dans le domaine des systèmes de transport, les véhicules à propulsion autonome sont de plus en plus utilisés, soit dans les réseaux urbains où, par exemple, il existe des trams à propulsion électrique rechargeable, soit dans les réseaux extra-urbains, par exemple en utilisant des trains électriques modernes qui exploitent des sources d'alimentation alternatives, comme des systèmes de piles à combustible.

Une des limites de ces véhicules à propulsion autonome, c'est-à-dire encore à alimentation en énergie électrique embarquée, réside dans la quantité totale d'énergie qui peut être embarquée à bord et qui doit être suffisante pour alimenter tous les équipements consommateurs d'énergie du véhicule pendant le trajet complet, ou au moins pendant une partie de celui-ci s'il est possible de recharger près de stations de chargement installées le long de l'itinéraire du véhicule.

Ces équipements consommateurs comportent des systèmes strictement nécessaires, notamment le système de propulsion qui doit garantir la marche du véhicule, et des systèmes auxiliaires qui sont conçus notamment pour améliorer la qualité du service et le confort des passagers à bord et qui peuvent fonctionner de manière facultative, par exemple les systèmes de chauffage, de ventilation et/ou d'air conditionné, le système d'éclairage, et cetera.

Il est évident que l'énergie disponible à bord du véhicule doit être gérée selon un compromis entre l'autonomie de marche recherchée et le confort de voyage.

A cet effet, une de solutions qui peuvent être utilisées pour satisfaire ce compromis prévoit d'équiper les véhicules avec une quantité d'énergie supérieure à celle nécessaire, par exemple stockée dans des moyens de stockage supplémentaires.

Cette solution n'est pas très efficace car elle ne peut pas toujours être implémentée. Elle est couteuse et, en outre, comporte une charge supplémentaire volumineuse et lourde pour les véhicules.

Une autre solution communément utilisée prévoit d'appliquer un délestage progressif et presque automatique des systèmes auxiliaires à bord des véhicules.

A cet effet, les systèmes de gestion de l'énergie à bord des véhicules pré-assignent une priorité aux équipements consommateurs, et durant le service, le cas échant, déconnectent un ou plusieurs des équipements consommateurs, en fonction de l'état de charge actuelle des moyens de stockage et, en particulier, quand cet état de charge dépasse vers le bas des seuils fixes prédéterminés.

Toutefois, bien que facultatifs pour la marche des véhicules, ces équipements contribuent au bien être des passagers, de sorte que la logique de délestage automatique précitée est susceptible de réduire ce bien être, voire de causer un désagrément, même quand il n'est pas strictement nécessaire ou quand la meilleure séquence de délestage pourrait être différente de celle prédéterminé en considération des conditions opérationnelles réelles.

US 2004/012446 divulgue un système de véhicule comprenant un système de commande qui commande divers composants du système de véhicule, un système de stockage d'énergie, et un module de gestion d'énergie qui est configuré pour contrôler le fonctionnement du système de stockage d'énergie. Pendant le fonctionnement, le système de véhicule est alimenté, pour au moins une partie de son itinéraire, par une source d'alimentation externe qui charge ainsi le système de stockage. Lorsque le véhicule n'est pas connecté à la source d'alimentation externe, l'énergie électrique pour entraîner le système de véhicule est fournie par le système de stockage d'énergie. A cet effet, le module de gestion d'énergie ordonne à des circuits de dérivation de connecter sélectivement les unités de stockage de sorte que le système de stockage d'énergie forme l'agencement de circuit désigné à mesure que les besoins énergétiques du système du véhicule changent.

Par conséquent, un but principal de la présente invention est de fournir une solution offrant des améliorations par rapport à l'état de l'art connu et, en particulier, d'avoir des véhicules à propulsion autonome où la gestion de l'énergie embarquée à bord permet d'éliminer, ou au moins de pallier substantiellement, les inconvénients cités ci-dessus.

Dans ce cadre, un objet de la présente invention est de fournir une solution pour la gestion de l'énergie embarquée à bord d'un véhicule à propulsion autonome qui soit flexible et peut être implémentée de façon automatique ou manuelle, qui peut être installée complètement à bord d'un véhicule et/ou partiellement ou complètement débarqué, par exemple dans un centre de contrôle à distance.

Un autre objet de la présente invention est de proposer une solution pour la gestion de l'énergie embarquée à bord d'un véhicule à propulsion autonome qui peut être utilisée pour gérer un seul véhicule, ou pour améliorer la gestion coordonnée de plusieurs véhicules qui se déplacent sur un réseau de transport en même temps.

Un autre objet de la présente invention est de proposer une solution pour la gestion de l'énergie embarquée à bord d'un véhicule à propulsion autonome hautement fiable, relativement facile à réaliser et à des coûts compétitifs.

Ce but, ces objets et d'autres qui deviendront apparents ci-après sont atteints par un système de gestion de l'énergie stockée à bord d'un véhicule à propulsion autonome alimenté en énergie électrique embarquée, selon la revendication 1.

Le but et les objets susmentionnés de la présente invention sont également atteints par un procédé de gestion de l'énergie stockée à bord d'un véhicule à propulsion autonome alimenté en énergie électrique embarquée, selon la revendication 6.

Enfin, le but et les objets susmentionnés de la présente invention sont également atteints par un véhicule de transport à propulsion autonome, notamment un véhicule ferroviaire, selon la revendication 10.

D'autres aspects et avantages de l'invention apparaîtront à la lecture de la description qui suit, donnée uniquement à titre d'exemple et faite en référence aux dessins annexés, parmi lesquels :
la Figure 1 est une représentation schématique d'un système de gestion de l'énergie stockée à bord d'un véhicule à propulsion autonome selon la présente invention ;
la Figure 2 est un schéma blocs représentant schématiquement un procédé pour la gestion de l'énergie stockée à bord d'un véhicule à propulsion autonome selon la présente invention ;
la Figure 3 est une vue représentant schématiquement des composants du deuxième dispositif de contrôle utilisé dans le système illustré sur la figure 1, selon un mode de réalisation de la présente invention ;
la Figure 4 illustre schématiquement un composant du deuxième dispositif de contrôle utilisé dans le système illustré sur la figure 1 et qui est en communication à distance avec un véhicule à propulsion autonome, selon un mode de réalisation de la présente invention.

Il est à noter que dans la description détaillée qui suit, les composants identiques ou similaires, du point de vue structurel et/ou fonctionnel, portent les mêmes références numériques, qu'ils soient représentés ou non dans des modes de réalisation différents de la présente description.

Il convient également de noter que, pour décrire de manière claire et concise la présente invention, les dessins ne sont pas nécessairement à l'échelle et que certaines caractéristiques peuvent être présentées sous une forme schématique.

En outre, lorsque le terme "adapté" ou "agencé" ou "configuré" est utilisé ici en se référant à tout composant dans son ensemble, ou à toute partie d'un composant, ou à une combinaison de composants, il doit être compris que cela signifie et englobe la structure et/ou la configuration et/ou la forme et/ou le positionnement du composant ou de la partie que ce terme désigne.

En particulier, par rapport à des moyens/modules électroniques et/ou logiciels, chacun des termes indiqués ci-dessus englobe les circuits électroniques, ainsi que des codes logiciels et/ou des algorithmes ou des programmes complets stockés ou en cours d'exécution.

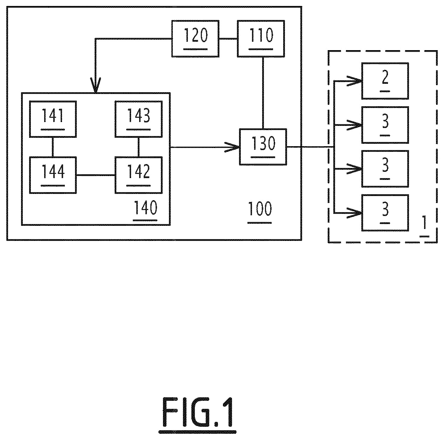

La figure 1 illustre schématiquement un système selon la présente invention, désigné par le numéro de référence 100, pour la gestion de l'énergie stockée à bord d'un véhicule à propulsion autonome, c'est-à-dire autonome en énergie électrique, c'est-à-dire encore à alimentation en énergie électrique embarquée.

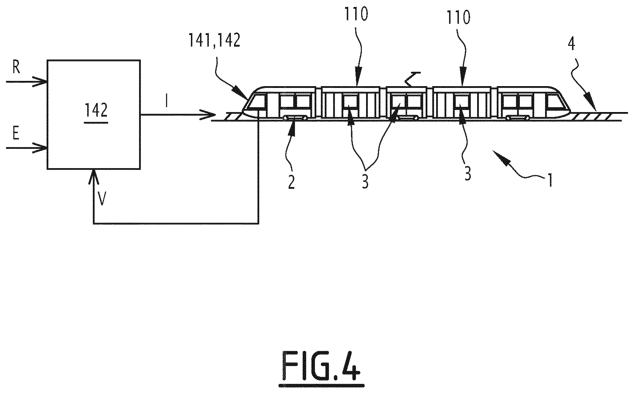

Un exemple de véhicule à propulsion autonome est illustré sur la figure 4 sous forme d'un tramway, et désigné par le numéro de référence 1.

La définition de « véhicule à propulsion autonome » utilisée ici doit être interprétée dans le sens le plus large possible, c'est-à-dire comme incluant tout type de véhicule à propulsion autonome apte à interagir avec, ou comprenant, un système de gestion d'énergie, ou fonctionnant selon un procédé de gestion d'énergie tel que décrit ci-dessous.

Cette définition peut donc être considérée comme couvrant les véhicules ferroviaires, par exemple les trams ou les trains, les voitures, les autobus, les vélos, qui ont une quantité limitée d'énergie embarquée à bord et qui doivent fonctionner de façon autonome sur le plan énergétique pendant leur voyage.

Comme représenté schématiquement sur la figure 1, le système de gestion 100 comporte au moins un dispositif de stockage 110 adapté pour stocker à bord une quantité prédéfinie d'énergie destiné à alimenter électriquement un système de propulsion 2 et un ou plusieurs équipement(s) consommateur(s) 3 du véhicule 1.

En fonction du type de véhicule 1, le système de propulsion 2 peut comprendre ou être constitué, par exemple, par un moteur électrique ou des dispositifs équivalents, de manière connue en soi ou facilement accessible à l'homme du métier.

Les équipements consommateurs 3 peuvent comprendre par exemple des systèmes dits HVAC, notamment de chauffage, de ventilation et/ou d'air conditionné réservés aux passagers du véhicule, des systèmes d'éclairage, et cetera, et sont éligibles au délestage afin de réduire et/ou d'optimiser la quantité d'énergie électrique prélevée au niveau du dispositif de stockage 110.

Le dispositif de stockage 110 peut, de manière connue en soi, comprendre, par exemple, une ou plusieurs batterie(s) rechargeable(s) qui sont placée(s) sur le toit du véhicule 1 comme illustré dans l'exemple de figure 4 ou une pile à combustible associée à une réserve de dihydrogène.

Le système de gestion 100 comporte un premier dispositif de contrôle 120 qui est installé à bord du véhicule 1 et est configuré pour fournir, à un deuxième dispositif de contrôle 140 ou dispositif de contrôle-commande 140, et comme illustré sur la figure 1, au moins un signal représentatif du niveau d'énergie actuel disponible dans le dispositif de stockage 110, lorsque le véhicule 1 se déplace le long d'un trajet sur un réseau de transport, par exemple le long d'une voie ferrée 4 d'un réseau de tramway urbain, comme schématiquement illustré sur la figure 4.

Par exemple, le premier dispositif de contrôle 120 peut comprendre un détecteur et/ou un circuit électronique et/ou un module logiciel de type connu en soi.

Le système de gestion 100 comporte aussi :
- un système de distribution d'énergie 130, installé aussi à bord du véhicule 1 et apte à gérer la distribution de l'énergie stockée entre le système de propulsion 2 et l'un ou plusieurs des équipement(s) consommateur(s) 3 ; et
- le deuxième dispositif de contrôle140 ou dispositif de contrôle-commande 140 ci-dessus mentionné et dans la description suivante indiqué comme dispositif de contrôle-commande 140.

Le dispositif de contrôle-commande 140 est par exemple connecté de manière opérationnelle au moins au système de distribution d'énergie 130 et au premier dispositif de contrôle 120 et comporte, par exemple, un système à base de processeurs, d'un type commercialement disponible, convenablement doté de circuits électroniques et programmé avec du code logiciel pour réaliser les fonctionnalités de contrôle-commande du véhicule associé 1 conçues dans le cadre de la présente invention.

Le système de distribution de l'énergie 130 comporte plusieurs composants connus en soi.

Par exemple, si le véhicule 1 est un véhicule ferroviaire, ces composants comportent un convertisseur statique qui produit, à partir de l'énergie contenue dans le dispositif de stockage 110, de l'électricité, par exemple triphasée à 50 Hz, destinée à alimenter un ou plusieurs des équipements consommateurs 3, des compresseurs ou plusieurs organes de chauffage et des unités de contrôle correspondantes, des batteries auxiliaires, des ventilateurs, et cetera.

La distribution d'énergie électrique à bord du véhicule 1 est gérée sur la base de modes ou profils de distribution d'énergie ou de fonctionnement prédéterminés et, en particulier, le système de gestion 130 est configuré pour passer d'un mode actuel de distribution d'énergie à un autre mode de distribution d'énergie, parmi les modes de distribution d'énergie prédéterminés, quand le niveau d'énergie actuellement disponible dans le dispositif de stockage varie et dépasse des seuils correspondants prédéfinis.

Par exemple, ces modes ou profils sont constitués par, ou comportent, des algorithmes basés chacun sur des valeurs des variables de configuration de ces modes de distribution prédétermines et qui sont en particulier liées aux seuils prédéfinis.

Ces algorithmes peuvent être stockés par exemple dans une mémoire 144 faisant partie du dispositif de contrôle-commande 140 prévu dans le système de gestion 100 selon la présente invention.

En particulier, le dispositif de contrôle-commande 140 est configuré pour modifier, en temps réel, un ou plusieurs des seuils prédéfinis et/ou des variables de configuration de ces modes de distribution d'énergie prédétermines qui sont par exemple liées aux seuils prédéfinis, en fonction d'un ou plusieurs paramètre(s) ou information (s) relatif(s) à au moins une des conditions opérationnelles actuelles du véhicule (V) et/ou du réseau de transport (R), et/ou des conditions environnementales (E).

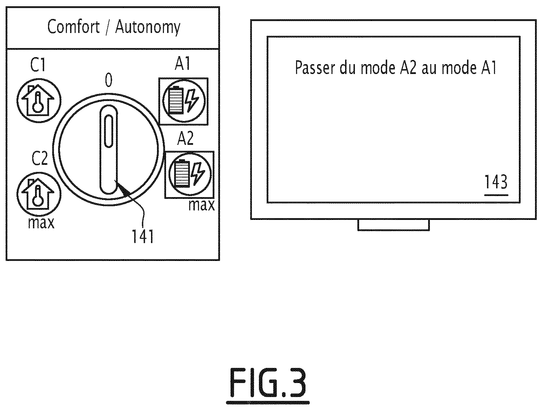

Selon un mode de réalisation du système 100, le dispositif de contrôle-commande 140 comporte un sélecteur 141, illustré sur la figure 3, qui est placé à bord du véhicule 1.

Le sélecteur 141 est configuré pour être actionné manuellement par le conducteur du véhicule 1, par exemple sur la base des instructions reçus ou de son ressenti personnel, c'est-à-dire sur la base de sa perception des conditions environnementales, afin de modifier un ou plusieurs des seuils prédéfinis et/ou des variables de configuration.

Par exemple, quand le sélecteur 141 est actionné, le dispositif de contrôle-commande 140 émet un signal de pilotage au système de distribution d'énergie 130 apte à modifier un seuil prédéfini et passer d'un mode de fonctionnement actuel à un autre mode souhaité.

Donc, comme illustré sur la figure 3, un conducteur peut, en tournant le sélecteur 141, passer directement d'un mode de distribution « A2 » à un mode de distribution « A1 ». Le mode de distribution « A2 » est un mode d'autonomie prioritaire, où l'énergie disponible, par rapport à un mode de fonctionnement standard, est réservée presque totalement au système de propulsion 2 et où plusieurs ou tous les équipements consommateurs 3 sont délestés. Le mode de distribution « A1 » est un mode d'autonomie préférée, où l'énergie disponible est principalement réservée au système de propulsion 2 et la consommation des équipements 3 est réduite en délestant un nombre plus limité de ces équipements ou en modifiant leur niveau de consommation, par exemple en réglant la température de référence dans le véhicule pour réduire la consommation du système de climatisation ou de chauffage.

L'exemple sur la figure 3 indique aussi un mode de distribution « C1 », c'est à dire de confort préféré, où le délestage des équipements consommateurs 3, par rapport à un mode de fonctionnement standard, peut être retardé, et un mode de distribution « C2 », c'est à dire de confort privilégié où l'énergie distribuée aux équipements 3 est encore plus augmentée, par exemple pour améliorer la climatisation à bord du véhicule 1.

Selon un mode possible de réalisation, le dispositif de contrôle-commande 140 comporte un dispositif de supervision à distance, représenté schématiquement sur la figure 4 avec le numéro de référence 142, qui est configuré pour élaborer et envoyer au véhicule 1 des instructions à exécuter pour modifier un ou plusieurs des seuils prédéfinis et/ou des variables de configuration.

En particulier, comme illustré sur la figure 3, le dispositif de contrôle-commande 140 comporte un écran 143 qui est installé à bord du véhicule 1 et est configuré pour afficher des instructions (I) envoyées par le dispositif de supervision à distance 142, par exemple des instructions textuelles à exécuter, pour modifier un ou plusieurs des seuils prédéfinis et/ou des variables de configuration.

Le sélecteur 141 et l'écran 143 peuvent faire partie d'une interface homme-machine placée à bord du véhicule 1 où le conducteur peut lire les instructions et tourner le sélecteur 141 pour sélectionner le profil de fonctionnement souhaité.

En variante, le dispositif de supervision à distance 142 est configuré pour élaborer un code logiciel et le télécharger à bord du véhicule 1 en modifiant directement un ou plusieurs des seuils prédéfinis et/ou des variables de configuration.

Par exemple, ce code peut être téléchargé directement dans l'unité de mémoire 144 placée à bord du véhicule 1, où les algorithmes des modes ou profils de distribution énergétique prédéfinis sont stockés.

Alternativement, ce code logiciel ou les instructions peuvent être élaborées par un module d'élaboration faisant partie du dispositif de contrôle-commande 140 et placé directement à bord du véhicule.

Dans tous les cas, la modalité de passage d'un mode de distribution d'énergie à un autre mode, ou la modalité de distribution d'un mode de distribution d'énergie en exécution, peuvent être modifiée en temps réel et de façon dynamique en modifiant les seuils et/ou des variables de configuration, cette modification comportant une distribution d'énergie différente une fois que les instructions sont implémentées par le système de distribution 130.

Selon un mode de réalisation possible, afin d'exécuter une stratégie de délestage bien calibrée et plus sophistiquée, le dispositif de contrôle-commande 140 du système de gestion 100 est configuré pour modifier, en temps réel, un ou plusieurs des seuils ou des variables de configuration en utilisant au moins un paramètre opérationnel ou une information sélectionné dans le groupe comprenant :
- un indice de confort thermique actuel à bord du véhicule 1, lequel indice est facteur de la température et de l'humidité. Donc, la stratégie de passage d'un mode de fonctionnement à un autre mode en délestant des équipements consommateurs 3 peut être liée au besoin de réduction de puissance consommée, mais aussi au risque de dégrader le confort des passagers ;
- un nombre de passagers actuellement embarqués et/ou prévus à embarquer à bord du véhicule 1, classé par exemple entre « faible », « moyenne », « haute » affluence. Ce nombre est significatif pour évaluer la masse totale du véhicule 1 à propulser et la quantité de passagers qui pourrait subir de l'inconfort. Un algorithme du dispositif contrôle-commande 140 peut évaluer la vitesse de la dégradation de l'indice de confort thermique et donc choisir ou non de repousser le moment du délestage de la climatisation ;
- des conditions actuelles et/ou prévues de la météo, qui peuvent être prise en considération sur la base du ressenti ou de l'observation directe du conducteur et/ou en considérant des signaux détectés par des capteurs. De cette façon la stratégie de délestage sera différente en cas de de canicule et en cas de conditions tempérées ou froides et l'impact du délestage ne se fera pas sentir de la même façon. Il faudra soit privilégier le confort, soit ne pas trop le dégrader;
- des conditions actuelles et/ou prévues du trafic sur le réseau. Dans ce cas, l'algorithme du dispositif de contrôle-commande 140 prend en considération le trafic routier, les heures de pointe quotidiennes, la présence d'accidents le long du trajet à parcourir, les risques d'arrêts imprévus notamment à l'approche des carrefours, des évènements exceptionnels comme la sortie d'un stade après un concert ou un match de football, des départs en vacances, et cetera. Donc, la priorité de distribution de l'énergie sera donnée par exemple au débit du système de transport en évitant tout risque de panne;
- la présence et l'état des systèmes de recharge le long du trajet à parcourir. Par exemple, l'algorithme du dispositif de contrôle-commande 140 peut prendre en considération la présence éventuelle de stations de recharge sur le trajet à parcourir et si elles sont défaillantes, instables ou non opérationnelle et, donc, s'il devra prendre éventuellement le maximum de précautions et privilégier l'autonomie du système de propulsion 2 ;
- le profil de mission du véhicule 1, sa position et sa vitesse actuelle et l'itinéraire restant à parcourir. Par exemple, l'algorithme du dispositif de contrôle-commande 140 peut prendre en considération la direction du véhicule et son positionnement précis qui sont nécessaires pour évaluer l'énergie requise pour franchir telle ou telle inter-station, pour prendre en compte certaines zones qui contiennent plus ou moins de carrefours routiers, certaines zones plus ensoleillées que d'autres, et cetera. De cette façon il est possible d'améliorer le calcul de la consommation d'énergie nécessaire pour le reste du trajet à parcourir et d'affiner la stratégie Autonomie / Confort en fonction du lieu, lorsque les enjeux sont différents ou lorsqu'il y a une panne sur le réseau ;
- l'état du dispositif de stockage d'énergie 110 et/ou du système de propulsion 2 et/ou d'un ou plusieurs équipement(s) consommateur(s) 3 du véhicule 1. Dans ce cas, l'algorithme du dispositif de contrôle-commande 140 peut prendre en considération la quantité d'énergie instantanée embarquée ; la capacité de charge dans les conditions réelles par rapport à la capacité de charge maximale dans les conditions idéale, c'est-à-dire avec des composants neufs, à la température idéale de 20°C, avec la tension de charge correcte, car des éléments de stockage d'énergie en défaut changeraient la stratégie de gestion énergétique; la traction réelle pour vérifier que la consommation réelle instantanée est cohérente avec la valeur estimée, car un coffre de traction défaillant influencerait aussi la stratégie de gestion énergétique ; la consommation moyenne et instantanée des équipements pour estimer la vitesse à laquelle les équipements 3 vont consommer l'énergie disponible.

Ces paramètres ou information sont utilisé pour définir le niveau de « délestage » demandé aux équipements consommateurs 3, pour réduire la marge d'énergie résiduelle stockée quand la capacité le permet, pour recaler le modèle de consommation et améliorer l'algorithme par exemple via une méthode de Big Data, et cetera.

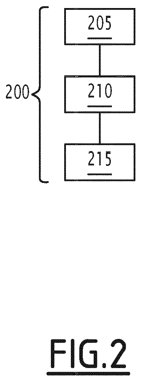

Un procédé 200 pour la gestion de l'énergie stockée à bord d'un véhicule 1 comprenant un dispositif de stockage 110 adapté pour stocker à bord du véhicule 1 une quantité prédéfinie d'énergie destiné à alimenter électriquement un système de propulsion 2 et un ou plusieurs équipement(s) consommateur(s) 3 du véhicule 1, selon la présente invention, est décrit ci-après en référence à la figure 2.

En particulier, le procédé 200 comporte au moins les étapes suivantes :
- 205 : contrôler le niveau actuel d'énergie stockée dans un dispositif de stockage 110, lorsque le véhicule 1 se déplace le long d'un trajet sur un réseau de transport 4;
- 210 : alimenter électriquement, avec l'énergie stockée disponible, un système de propulsion 2 et un ou plusieurs équipement(s) consommateur(s) 3 du véhicule 1, l'énergie d'alimentation étant distribuée selon un mode actuel de distribution d'énergie sélectionné parmi une pluralité des modes de distribution d'énergie prédéterminés, le passage d'un mode de distribution d'énergie actuel à un autre mode de distribution d'énergie parmi les modes de distribution d'énergie prédéterminés ayant lieu quand le niveau d'énergie stockée actuellement disponible à bord du véhicule 1 dépasse des seuils correspondants prédéfinis ;
- 215 : modifier, en temps réel, un ou plusieurs des seuils prédéfinis et/ou des variables de configuration de ces modes des distribution d'énergie prédétermines, qui sont en particulier liées à ces seuils prédéfinis, alors que l'un ou plusieurs des seuils prédéfinis et/ou des variables de configuration est/sont modifié(es) en fonction d'un ou plusieurs paramètre(s) ou information(s) relatif(s) à au moins une des conditions opérationnelles actuelles (V) du véhicule 1, du réseau de transport (R) et/ou des conditions environnementales (E).

Selon un mode possible de réalisation, l'étape 215, où l'un ou plusieurs des seuils prédéfinis et/ou des variables de configuration sont modifiés, comporte le fait d'actionner manuellement le sélecteur 141, afin d'envoyer un signal de commande correspondant apte à modifier un ou plusieurs des seuils prédéfinis et/ou des variables de configuration.

Selon un mode possible de réalisation du procédé 200, l'étape 215 comporte le fait d'élaborer à distance et envoyer au véhicule 1 des instructions (I) à exécuter pour modifier un ou plusieurs des seuils prédéfinis et/ou des variables de configuration.

En particulier, l'étape 215 peut comporter le fait d'afficher sur l'écran 143 placé à bord du véhicule 1 des instructions à exécuter élaborées à distance, par exemple des instructions textuelles, pour modifier un ou plusieurs des seuils prédéfinis et/ou des variables de configuration.

En variante, l'étape 215 comporte le fait de télécharger à bord du véhicule 1, par exemple dans une mémoire 144 où les modes ou profils de distribution sont stockés, un code logiciel élaboré à distance afin de modifier directement l'un ou plusieurs des seuils prédéfinis et/ou des variables de configuration.

Il ressort clairement de la description qui précède que le système 100 et procédé de gestion 200, ainsi que le véhicule de transport 1 correspondant, permettent d'atteindre le but à la base de la présente invention et les objectifs visés, car la gestion de l'énergie embarquée à bord du véhicule est faite de façon dynamique et en temps réel en prenant en compte des paramètres de fonctionnement ou des informations reliées actuelles.

Ces résultats sont obtenus selon une solution très flexible qui peut être appliquée lors de la construction de tout véhicule ferroviaire neuf ou lors de l'intervention sur des véhicules existants, avec des modifications simples permettant aux conducteurs, ainsi qu'à des superviseurs externes, de gérer l'énergie embarquée soit de manière simple, par exemple manuelle, soit de manière plus sophistiquée, par exemple automatique en rapport avec l'application spécifique.

En outre, la distribution de l'énergie peut être gérée avec des composants installés complètement à bord d'un véhicule 1 et/ou avec des composants partiellement non-embarqués, par exemple placés dans un centre de contrôle à distance.

En particulier, si désiré, la gestion de l'énergie à bord d'un véhicule peut être supervisée par un centre de contrôle à distance et peut être aussi coordonnée parmi plusieurs véhicules présents en même temps sur le réseau de transport 4, en tenant compte de tous les, ou au moins d'une partie des, paramètres ou informations indiqués ci-dessus pour le véhicule 1, ainsi que pour les autres véhicules.

Le système 100, le procédé 200 et véhicule 1 ainsi conçus sont susceptibles de modifications et de variations. Par exemple, il est possible de stocker beaucoup plus de modes ou profils de distribution d'énergie prédéfinis dans la mémoire 144 et/ou la même mémoire peut être installée à bord du véhicule ou à distance en téléchargeant ces modes ou profils pendant le service du véhicule.

Tous les détails peuvent en outre être remplacés par des éléments techniquement équivalents.

## Revendications

1. - Système de gestion (100) de l'énergie stockée à bord d'un véhicule (1) à propulsion autonome alimenté en énergie électrique embarquée, le système de gestion (100) comprenant au moins :
- un dispositif de stockage (110) adapté pour stocker à bord du véhicule (1) une quantité prédéfinie d'énergie destiné à alimenter électriquement un système de propulsion (2) et un ou plusieurs équipement(s) consommateur(s) (3) du véhicule (1);
- un premier dispositif de contrôle (120) installé à bord du véhicule (1) et un deuxième dispositif de contrôle (140), le premier dispositif de contrôle (120) étant apte à fournir, au deuxième dispositif de contrôle (140), au moins un signal représentatif du niveau d'énergie actuellement disponible dans le dispositif de stockage (110) lorsque le véhicule (1) se déplace le long d'un trajet sur un réseau de transport (4); **caractérisé en ce qu'**il comporte en outre :
- un système de distribution (130) placé à bord du véhicule et apte à gérer la distribution de l'énergie stockée entre le système de propulsion (2) et l'un ou plusieurs des équipement(s) consommateur(s) (3) selon des modes de distribution d'énergie prédéterminés (A1, A2, C1, C2), le système de distribution (130) étant configuré pour passer d'un mode actuel de distribution d'énergie à un autre mode de distribution d'énergie, parmi les modes de distribution d'énergie prédéterminés, quand le niveau d'énergie actuellement disponible dans le dispositif de stockage (110) atteint des seuils correspondants prédéfinis ; et **en ce que**
- le deuxième dispositif de contrôle (140) est configuré pour modifier, en temps réel, un ou plusieurs des seuils prédéfinis et/ou des variables de configuration de ces modes de distribution d'énergie prédéterminés, en fonction d'un ou plusieurs paramètre(s) ou information(s) (V, R, E) relatif(s) à au moins une des conditions opérationnelles actuelles du véhicule (1), du réseau de transport (4) et/ou des conditions environnementales, dans lequel le deuxième dispositif de contrôle (140) est configuré pour modifier, en temps réel, un ou plusieurs des seuils prédéfinis et/ou des variables de configuration de ces modes de distribution d'énergie prédéterminés sur la base d'au moins un paramètre opérationnel ou d'une information sélectionnée dans le groupe comprenant :
- le nombre des passagers actuellement embarqués et/ou prévus à embarquer à bord du véhicule (1),
- les conditions actuelles et/ou prévues de la météo,
- les conditions actuelles et/ou prévues du trafic sur le réseau (4),
- la présence et l'état de systèmes de recharge le long du trajet à parcourir,
- la position et la vitesse actuelles du véhicule (1)
- l'itinéraire restant à parcourir,
- l'indice de confort thermique actuel à bord du véhicule (1),
- l'état du dispositif de stockage (110) et/ou du système de propulsion (2) et/ou d'un ou plusieurs équipement(s) consommateur(s) (3) du véhicule (1).

2. - Système de gestion (100) selon la revendication 1, dans lequel le deuxième dispositif de contrôle (140) comporte un sélecteur (141) qui est placé à bord du véhicule et est configuré pour être actionné manuellement afin de modifier un ou plusieurs des seuils prédéfinis et/ou des variables de configuration.

3. - Système de gestion (100) selon l'une des revendications 1 ou 2, dans lequel le deuxième dispositif de contrôle (140) comporte un dispositif de supervision à distance (142) configuré pour élaborer et envoyer au véhicule (1) des instructions à exécuter pour modifier un ou plusieurs des seuils prédéfinis et/ou des variables de configuration.

4. - Système de gestion (100) selon la revendication 3, dans lequel le deuxième dispositif de contrôle (140) comporte un écran (143) placé à bord du véhicule (1) et configuré pour afficher des instructions textuelles envoyées par le dispositif de supervision à distance (142) et à exécuter pour modifier un ou plusieurs des seuils prédéfinis et/ou des variables de configuration.

5. - Système de gestion (100) selon la revendication 3 ou 4, dans lequel le dispositif de supervision à distance (142) est configuré pour élaborer un code logiciel et le télécharger à bord du véhicule (1) en modifiant directement un ou plusieurs des seuils prédéfinis et/ou des variables de configuration.

6. Procédé de gestion (200) de l'énergie stockée à bord d'un véhicule (1) à propulsion autonome alimenté en énergie électrique embarquée et comprenant un dispositif de stockage (110) adapté pour stocker à bord du véhicule (1) une quantité prédéfinie d'énergie destiné à alimenter électriquement un système de propulsion (2) et un ou plusieurs équipement(s) consommateur(s) (3) du véhicule (1), le procédé de gestion (200) comportant au moins l'étape de :
- (205) : contrôler le niveau actuel d'énergie stockée lorsque le véhicule se déplace le long d'un trajet sur un réseau de transport (4); le procédé de gestion (200) étant **caractérisé en ce qu'**il comporte en outre les étapes suivantes :
- (210) : alimenter électriquement, avec l'énergie stockée disponible à bord, le système de propulsion (2) et le ou les équipement(s) consommateur(s) (3) du véhicule (1), l'énergie d'alimentation étant distribuée selon un mode actuel de distribution d'énergie sélectionné parmi une pluralité de modes de distribution d'énergie prédéterminés, le passage d'un mode de distribution d'énergie actuel à un autre mode de distribution d'énergie parmi les modes de distribution d'énergie prédéterminés ayant lieu quand le niveau d'énergie stockée actuellement disponible à bord du véhicule atteint des seuils correspondants prédéfinis ;
- (215) : modifier, en temps réel, un ou plusieurs des seuils prédéfinis et/ou des variables de configuration de ces modes des distribution d'énergie prédétermines, l'un ou plusieurs des seuils prédéfinis et/ou des variables de configuration étant modifié(es) en fonction d'un ou plusieurs paramètre(s) ou information(s) (V, R, E) relatif(s) à au moins une des conditions opérationnelles actuelles du véhicule (1), du réseau de transport (4) et/ou des conditions environnementales, dans lequel l'un ou plusieurs des seuils prédéfinis et/ou des variables de configuration de ces modes de distribution d'énergie prédéterminés sont modifiés sur la base d'au moins un paramètre opérationnel ou d'une information sélectionnée dans le groupe comprenant :
- le nombre des passagers actuellement embarqués et/ou prévus à embarquer à bord du véhicule (1),
- les conditions actuelles et/ou prévues de la météo,
- les conditions actuelles et/ou prévues du trafic sur le réseau (4),
- la présence et l'état de systèmes de recharge le long du trajet à parcourir,
- la position et la vitesse actuelles du véhicule (1)
- l'itinéraire restant à parcourir,
- l'indice de confort thermique actuel à bord du véhicule (1),
- l'état du dispositif de stockage (110) et/ou du système de propulsion (2) et/ou d'un ou plusieurs équipement(s) consommateur(s) (3) du véhicule (1).

7. Procédé de gestion (200) selon la revendication 6, dans lequel l'étape (215) de modification comporte le fait d'actionner manuellement un sélecteur afin d'envoyer un signal de commande correspondant apte à modifier un ou plusieurs des seuils prédéfinis et/ou des variables de configuration.

8. Procédé de gestion (200) selon l'un des revendications 6 ou 7, dans lequel l'étape (215) de modification comporte le fait d'élaborer à distance et d'envoyer au véhicule (1) des instructions à exécuter pour modifier un ou plusieurs des seuils prédéfinis et/ou des variables de configuration.

9. Procédé de gestion (200) selon la revendication 8, dans lequel l'étape (215) de modification comporte le fait d'afficher sur un écran (143) placé à bord du véhicule (1) des instructions textuelles élaborées à distance et à exécuter pour modifier un ou plusieurs des seuils prédéfinis et/ou des variables de configuration, ou de télécharger à bord du véhicule (1) un code logiciel élaboré à distance afin de modifier directement un ou plusieurs des seuils prédéfinis et/ou des variables de configuration.

10. Véhicule (1) de transport, notamment véhicule ferroviaire, le véhicule (1) étant adapté pour interagir avec, ou comprenant, un système de gestion (100) de l'énergie stockée à bord selon l'une des revendications 1 à 5.

## Patentansprüche

1. Verwaltungssystem (100) für Energie, welche an Bord eines Fahrzeugs (1) mit autonomem Antrieb gespeichert ist, welches mit aufgenommener elektrischer Energie versorgt wird, wobei das Verwaltungssystem (100) wenigstens umfasst:
- eine Speichervorrichtung (110), welche dazu eingerichtet ist, an Bord des Fahrzeugs (1) eine vorbestimmte Menge an Energie zu speichern, welche dazu vorgesehen ist, ein Antriebssystem (2) und eine oder mehrere Verbraucherausrüstung(en) (3) des Fahrzeugs (1) elektrisch zu versorgen;
- eine erste Steuervorrichtung (120), welche an Bord des Fahrzeugs (1) installiert ist, und eine zweite Steuervorrichtung (140), wobei die erste Steuervorrichtung (120) dazu in der Lage ist, der zweiten Steuervorrichtung (140) wenigstens ein Signal bereitzustellen, welches den Pegel von momentan in der Speichervorrichtung (110) verfügbarer Energie repräsentiert, wenn sich das Fahrzeug (1) entlang einer Strecke auf einem Verkehrsnetz (4) fortbewegt; **dadurch gekennzeichnet, dass** es ferner umfasst:
- ein Verteilungssystem (130), welches an Bord des Fahrzeugs platziert ist und in der Lage ist, die Verteilung der gespeicherten Energie zwischen dem Antriebssystem (2) und der einen oder den mehreren Verbraucherausrüstung(en) (3) gemäß vorbestimmten Energieverteilungsmodi (A1, A2, C1, C2) zu verwalten, wobei das Verteilungssystem (130) dazu eingerichtet ist, von einem momentanen Energieverteilungsmodus zu einem anderen Energieverteilungsmodus unter den vorbestimmten Energieverteilungsmodi überzugehen, wenn der momentan in der Speichervorrichtung (110) verfügbare Energiepegel entsprechende vordefinierte Schwellenwerte erreicht; und dadurch, dass
- die zweite Steuervorrichtung (140) dazu eingerichtet ist, in Echtzeit eine(n) oder mehrere der vordefinierten Schwellenwerte und/oder der Konfigurationsvariablen dieser vorbestimmten Energieverteilungsmodi in Funktion von einem oder mehreren Parameter(n) oder Information(en) (V, R, E) bezüglich wenigstens einer der momentanen Betriebsbedingungen des Fahrzeugs (1), des Verkehrsnetzes (4) und/oder von Umweltbedingungen zu modifizieren, wobei die zweite Steuervorrichtung (140) dazu eingerichtet ist, in Echtzeit einen oder mehrere der vordefinierten Schwellenwerte und/oder der Konfigurationsvariablen dieser vorbestimmten Energieverteilungsmodi auf Grundlage von wenigstens einem Betriebsparameter oder einer Information zu modifizieren, welche ausgewählt ist aus der Gruppe, umfassend:
- die Anzahl von Passagieren, welche momentan an Bord des Fahrzeugs (1) aufgenommen sind und/oder vorhergesagt sind, aufgenommen zu sein,
- die momentanen und/oder vorhergesagten Wetterbedingungen,
- die momentanen und/oder vorhergesagten Verkehrsbedingungen auf dem Netz (4),
- das Vorliegen und den Zustand von Ladesystemen entlang der zu befahrenden Strecke,
- die momentane Position und Geschwindigkeit des Fahrzeugs (1),
- der verbleibende zu befahrende Streckenplan,
- der momentane thermische Komfortindex an Bord des Fahrzeugs (1),
- der Zustand der Speichervorrichtung (110) und/oder des Antriebssystems (2) und/oder der einen oder mehreren Verbraucherausrüstung(en) (3) des Fahrzeugs (1).

2. Verwaltungssystem (100) nach Anspruch 1, wobei die zweite Steuervorrichtung (140) ein Auswahlelement (141) umfasst, welches an Bord des Fahrzeugs platziert und dazu eingerichtet ist, manuell betätigt zu werden, um eine(n) oder mehrere der vordefinierten Schwellenwerte und/oder der Konfigurationsvariablen zu modifizieren.

3. Verwaltungssystem (100) nach einem der Ansprüche 1 oder 2, wobei die zweite Steuervorrichtung (140) eine Distanz-Überwachungsvorrichtung (142) umfasst, welche dazu eingerichtet ist, Anweisungen zu erzeugen und zu dem Fahrzeug (1) zu schicken, welche auszuführen sind, um eine(n) oder mehrere der vordefinierten Schwellenwerte und/oder der Konfigurationsvariablen zu modifizieren.

4. Verwaltungssystem (100) nach Anspruch 3, wobei die zweite Steuervorrichtung (140) einen Bildschirm (143) umfasst, welcher an Bord des Fahrzeugs (1) platziert und dazu eingerichtet ist, Textanweisungen anzuzeigen, welche durch die Distanz-Überwachungsvorrichtung (142) geschickt worden sind und auszuführen sind, um eine(n) oder mehrere der vordefinierten Schwellenwerte und/oder der Konfigurationsvariablen zu modifizieren.

5. Verwaltungssystem (100) nach Anspruch 3 oder 4, wobei die Distanz-Überwachungsvorrichtung (142) dazu eingerichtet ist, einen logischen Code zu erzeugen und ihn an Bord des Fahrzeugs (1) zu laden, indem direkt eine(r) oder mehrere der vordefinierten Schwellenwerte und/oder der Konfigurationsvariablen modifiziert wird/werden.

6. Verwaltungsverfahren (200) für Energie, welche an Bord eines Fahrzeugs (1) mit autonomem Antrieb gespeichert ist, welches mit aufgenommener elektrischer Energie versorgt wird und eine Speichervorrichtung (110) umfasst, welche dazu eingerichtet ist, an Bord des Fahrzeugs (1) eine vorbestimmte Energiemenge zu speichern, welche dazu vorgesehen ist, ein Antriebssystem (2) und eine oder mehrere Verbraucherausrüstung(en) (3) des Fahrzeugs (1) elektrisch zu versorgen, wobei das Verwaltungsverfahren (200) wenigstens den Schritt umfasst eines:
- (205): Steuerns des momentanen Pegels von gespeicherter Energie, wenn sich das Fahrzeug entlang einer Strecke auf einem Verkehrsnetz (4) fortbewegt; wobei das Verwaltungsverfahren (200) **dadurch gekennzeichnet ist, dass** es ferner die folgenden Schritte umfasst:
- (210): elektrisches Versorgen mit verfügbarer an Bord gespeicherter Energie des Antriebssystems (2) und der einen oder mehreren Verbraucherausrüstung(en) (3) des Fahrzeugs (1), wobei die Versorgungsenergie gemäß einem momentanen Energieverteilungsmodus verteilt wird, welcher unter einer Mehrzahl von vorbestimmten Energieverteilungsmodi ausgewählt wird, wobei der Übergang von einem momentanen Energieverteilungsmodus zu einem anderen Energieverteilungsmodus unter den vorbestimmten Energieverteilungsmodi erfolgt, wenn der momentan verfügbare an Bord gespeicherte Energiepegel entsprechende vordefinierte Schwellenwerte erreicht;
- (215): Modifizieren in Echtzeit von einem oder mehreren der vordefinierten Schwellenwerte und/oder der Konfigurationsvariablen dieser vorbestimmten Energieverteilungsmodi, wobei der eine oder die mehreren vordefinierten Schwellenwerte und/oder Konfigurationsvariablen modifiziert wird/werden in Funktion von einer/m oder mehreren Parameter(n) oder Information(en) (V, R, E) bezüglich wenigstens einer der momentanen Betriebsbedingungen des Fahrzeugs (1), des Verkehrsnetzes (4) und/oder von Umweltbedingungen, wobei der eine oder die mehreren der vordefinierten Schwellenwerte und/oder der Konfigurationsvariablen dieser vorbestimmten Energieverteilungsmodi auf Grundlage von wenigstens einem Betriebsparameter oder einer Information modifiziert werden, welche ausgewählt wird aus der Gruppe, umfassend:
- die Anzahl von Passagieren, welche momentan an Bord des Fahrzeugs (1) aufgenommen sind und/oder vorhergesagt sind, aufgenommen zu werden,
- die momentanen und/oder vorhergesagten Wetterbedingungen,
- die momentanen und/oder vorhergesagten Verkehrsbedingungen auf dem Netz (4),
- das Vorliegen und den Zustand von Ladesystemen entlang der zu befahrenden Strecke,
- die momentane Position und Geschwindigkeit des Fahrzeugs (1),
- der verbleibende zu befahrende Streckenplan,
- der momentane thermische Komfortindex an Bord des Fahrzeugs (1),
- der Zustand der Speichervorrichtung (110) und/oder des Antriebssystems (2) und/oder der einen oder mehreren Verbraucherausrüstung(en) (3) des Fahrzeugs (1).

7. Verwaltungsverfahren (200) nach Anspruch 6, wobei der Schritt (215) des Modifizierens das Vornehmen einer manuellen Betätigung eines Auswahlelements umfasst, um ein entsprechendes Anweisungssignal zu senden, welches in der Lage ist, eine(n) oder mehrere der vordefinierten Schwellenwerte und/oder der Konfigurationsvariablen zu modifizieren.

8. Verwaltungsverfahren (200) nach einem der Ansprüche 6 oder 7, wobei der Schritt (215) des Modifizierens das Vornehmen eines entfernten Erzeugens und Sendens an das Fahrzeug (1) von Anweisungen umfasst, welche auszuführen sind, um eine(n) oder mehrere der vordefinierten Schwellenwerte und/oder der Konfigurationsvariablen zu modifizieren.

9. Verwaltungsverfahren (200) nach Anspruch 8, wobei der Schritt (215) des Modifizierens das Vornehmen eines Anzeigens an einem Bildschirm (143), welcher an Bord des Fahrzeugs (1) platziert ist, von Textanweisungen umfasst, welche entfernt erzeugt werden und auszuführen sind, um eine(n) oder mehrere der vordefinierten Schwellenwerte und/oder der Konfigurationsvariablen zu modifizieren, oder ein Laden an Bord des Fahrzeugs (1) eines logischen Codes, welcher entfernt erzeugt wird, um direkt eine(n) oder mehrere der vordefinierten Schwellenwerte und/oder der Konfigurationsvariablen zu modifizieren.

10. Transportfahrzeug (1), insbesondere Schienenfahrzeug, wobei das Fahrzeug (1) dazu eingerichtet ist, mit einem Verwaltungssystem (100) für an Bord gespeicherte Energie nach einem der Ansprüche 1 bis 5 zusammenzuwirken, oder es umfasst.

## Claims

1. A system (100) for managing the energy stored on-board an autonomously propelled vehicle (1) powered by on-board electrical energy, the management system (100) comprising at least:
- a storage device (110) adapted to store on-board the vehicle (1) a predefined amount of energy intended to electrically power a propulsion system (2) and one or more consumer equipment item(s) (3) of the vehicle (1);
- a first control device (120) installed on-board the vehicle (1) and a second control device (140), the first control device (120) being able to supply, to the second control device (140), at least one signal representative of the energy level currently available in the storage device (110) when the vehicle (1) moves along a route on a transport network (4); **characterised in that** it further comprises:
- a distribution system (130) placed on-board the vehicle and capable of managing the distribution of the stored energy between the propulsion system (2) and one or more of the consumer equipment item(s) (3) according to predetermined energy distribution modes (A1, A2, C1, C2), the distribution system (130) being configured to switch from one current energy distribution mode to another energy distribution mode, among the predetermined energy distribution modes, when the energy level currently available in the storage device (110) reaches corresponding predefined thresholds; and **in that**
- the second control device (140) is configured to modify, in real time, one or more of the predefined thresholds and/or the configuration variables of these predetermined energy distribution modes, according to one or more parameters or information item(s) (V, R, E) relating to at least one of the current operating conditions of the vehicle (1), the transport network (4) and/or the environmental conditions, wherein the second control device (140) is configured to modify, in real time, one or more of the predefined thresholds and/or configuration variables of these predetermined energy distribution modes based on at least one operational parameter or information item selected from the group comprising:
- the number of passengers currently on-board and/or intended to board the vehicle (1),
- current and/or expected weather conditions,
- the current and/or expected traffic conditions on the network (4),
- the presence and condition of charging systems along the route to be travelled,
- current position and speed of the vehicle (1),
- the remaining route to be travelled,
- the current thermal comfort index in the vehicle (1),
- the state of the storage device (110) and/or the propulsion system (2) and/or of one or more consumer equipment item(s) (3) of the vehicle (1).

2. The management system (100) according to claim 1, wherein the second control device (140) includes a selector (141) which is placed on-board the vehicle and which is configured to be operated manually to modify one or more of the predefined thresholds and/or configuration variables.

3. The management system (100) according to one of claims 1 or 2, wherein the second control device (140) includes a remote monitoring device (142) configured to process and send to the vehicle (1) instructions to be executed in order to modify one or more of the predefined thresholds and/or configuration variables.

4. The management system (100) according to claim 3, wherein the second control device (140) includes a screen (143) placed on-board the vehicle (1) and configured to display text instructions sent by the remote supervision device (142) and to be executed to modify one or more of the predefined thresholds and/or configuration variables.

5. The management system (100) according to claim 3 or 4, wherein the remote monitoring device (142) is configured to process a software code and to download it on-board the vehicle (1), directly modifying one or more of the predefined thresholds and/or configuration variables.

6. A method (200) for managing the energy stored on-board an autonomously propelled vehicle (1) which is powered by on-board electrical energy and which comprises a storage device (110) adapted to store on-board the vehicle (1) a predefined amount of energy intended to electrically power a propulsion system (2) and one or more consumer equipment item(s) (3) of the vehicle (1), the method (200) comprising at least the step of:
- (205): controlling the current level of stored energy when the vehicle is moving along a route on a transport network (4); the management method (200) being **characterised in that** it further comprises the following steps:
- (210) : electrically powering, with the stored energy available on-board, the propulsion system (2) and the consumer equipment item(s) (3) of the vehicle (1), the electrical energy supply being distributed according to a current energy distribution mode selected from a plurality of predetermined energy distribution modes, switching from one current energy distribution mode to another energy distribution mode among the predetermined energy distribution modes occurring when the level of stored energy currently available on-board the vehicle reaches corresponding predefined thresholds;
- (215): modifying, in real time, one or more of the predefined thresholds and/or configuration variables of these modes of predetermined energy distribution, one or more of the predefined thresholds and/or configuration variables being modified according to one or more parameter(s) or information item(s) (V, R, E) relating to at least one of the current operating conditions of the vehicle (1), the transport network (4) and/or the environmental conditions, wherein one or more of the predefined thresholds and/or configuration variables of these predetermined energy distribution modes is/are modified based on at least one operational parameter or information item selected from the group comprising:
- the number of passengers currently on-board and/or intended to board the vehicle (1),
- current and/or expected weather conditions,
- the current and/or expected traffic conditions on the network (4),
- the presence and condition of charging systems along the route to be travelled,
- current position and speed of the vehicle (1),
- the remaining route to be travelled,
- the current thermal comfort index in the vehicle (1),
- the state of the storage device (110) and/or the propulsion system (2) and/or one or more consumer equipment item(s) (3) of the vehicle (1).

7. The management method (200) according to claim 6, wherein the modification step (215) includes manually actuating a selector in order to send a corresponding control signal capable of modifying one or more of the predefined thresholds and/or configuration variables.

8. The management method (200) according to one of claims 6 or 7, wherein the modification step (215) includes remotely processing and sending to the vehicle (1) instructions to execute to modify one or more of the predefined thresholds and/or configuration variables.

9. The management method (200) according to claim 8, wherein the modification step (215) includes displaying on a screen (143) placed on-board the vehicle (1) remotely processed text instructions to be executed in order to modify one or more of the predefined thresholds and/or configuration variables, or downloading a remotely processed software code on-board the vehicle (1) in order to directly modify one or more of the predefined thresholds and/or configuration variables.

10. A transport vehicle (1), in particular railway vehicle, the vehicle (1) being adapted to interact with, or comprising, a system (100) for managing the energy stored on-board according to one of claims 1 to 5.
